# EUROPÄISCHE PATENTANMELDUNG

(11) **EP 4 703 104 A1**
(43) Veröffentlichungstag der Anmeldung: **04.03.2026**
(21) Anmeldenummer: 24197678.6
(22) Anmeldetag: 30.08.2024
(51) Int. Cl.: B27N 1/00, B27N 1/02, B27N 3/04, B27N 3/18, G01N 21/3554, G01N 21/3559, G01N 21/3563, G01N 21/359, B27N 3/08, B27N 3/14

(54) **VERFAHREN UND VORRICHTUNG ZUM PROZESSOPTIMIERTEN HERSTELLEN VON HOLZWERKSTOFFPLATTEN**

(71) Anmelder: Flooring Technologies Ltd., Kalkara SCM 1001 (MT)
(72) Erfinder: Noci, Fabian, 6110 Wolhusen (CH); Henning, Dirk, 5646 Abtwil (CH); Hasch, Joachim, 10317 Berlin (DE); Schwind, Volker, 10407 Berlin (DE)
(74) Vertreter: Kalkoff & Partner Patentanwälte mbB

(57) **Zusammenfassung**

Die Erfindung betrifft ein Verfahren sowie eine Vorrichtung zum prozessoptimierten Herstellen von Holzwerkstoffplatten, insbesondere von Faserplatten oder MDF-Platten. Um ein solches Verfahren sowie eine solche Vorrichtung bereitzustellen, die eine Qualitätsoptimierung sowie zugleich auch eine kontinuierliche Qualitätssicherung erlauben, eine besonders einfache und schnelle Bestimmung bestmöglicher Steuergrö-βen ermöglichen und zudem eine kontinuierliche Produktion mit geringstmöglichem Ausschuss und einer größtmöglichen Prozessstabilität gewährleisten, ist vorgesehen, dass wenigstens ein Prozessparameter, insbesondere der Wassergehalt und/oder die auf das Fasermaterial aufgetragene Klebstoffmenge, mittels Nahinfrarotspektroskopie gemessen und die gemessenen Werte des wenigstens einen Prozessparameters an eine Steuerungseinheit zur Prozessoptimierung und/oder zur prozessoptimierten Steuerung des Verfahrens gesendet werden. Die Messung des wenigstens einen Prozessparameters an einer oder mehreren Positionen erfolgt, ausgewählt aus einer Position bei dem Bereitstellen von Hackschnitzeln unmittelbar nach dem Holzplatz, insbesondere zwischen dem Holzplatz und einer nachfolgenden Hackschnitzelwäsche, und/oder einer Position nach dem Bereitstellen von Hackschnitzeln und beim Kochen des Fasermaterials, insbesondere zwischen einer Hackschnitzelwäsche und einem Vorkocher oder einem Kocher, und/oder einer Position unmittelbar nach dem Trocknen des beleimten Fasermaterials, insbesondere zwischen dem Trockner und einem Sichter und/oder dem Faserbunker, und/oder einer Position an oder in dem Faserbunker, insbesondere an einem Fenster des Faserbunkers, und/oder einer Position nach dem Aufstreuen, insbesondere nach der Streustation und/oder nach einem Formator, und/oder vor einer Presse zum Pressen des Formstrangs und/oder im Bereich des Formbandes.

## Beschreibung

Die Erfindung betrifft ein Verfahren sowie eine Vorrichtung zum prozessoptimierten Herstellen von Holzwerkstoffplatten, insbesondere von Faserplatten oder MDF-Platten.

Verfahren und Vorrichtungen zum Herstellen von Holzwerkstoffplatten und insbesondere zur Rohfaserplattenfertigung sind bereits in vielfältiger Ausgestaltung aus dem Stand der Technik bekannt. Dabei müssen zum Betrieb eines solchen Verfahrens zahlreiche Einstellungen und Steuergrößen gewählt werden, die von einer Vielzahl von Einflussgrößen, wie der Holzart, dem verwendeten Holzmaterial, der Feuchte des verwendeten Holzes, dem pH-Wert, der Hackschnitzelgröße, der Art und Zusammensetzung des verwendeten Klebstoffs, der Klebstoffmenge, der Menge des zugegebenen Wassers, der Prozess- und Presstemperatur, des Pressdrucks, der Pressdauer sowie weiteren Parametern, abhängen.

Im Stand der Technik erfolgt daher eine regelmäßige Qualitätskontrolle der fertiggestellten Holzwerkstoffplatten sowie eine engmaschige Überwachung der Qualität nach einer vorgenommenen Änderung im Herstellungsprozess. Bereits hier besteht jedoch der Nachteil, dass typischerweise die Vorrichtungen und Verfahren des Standes der Technik kontinuierlich betrieben werden und daher die Qualitätskontrolle typischerweise etwa 15 Minuten zeitversetzt zur Beleimung des Fasermaterials erfolgt. Wird dabei jedoch eine nicht optimale Qualität festgestellt, so wurde zum Zeitpunkt der Qualitätskontrolle einer fertiggestellten Holzwerkstoffplatte bereits eine größere Menge entsprechender Holzwerkstoffplatten produziert, sodass bis zu einer optimalen Einstellung der Steuergrößen des Verfahrens bereits eine nennenswerte Menge Holzwerkstoffplatten wenigstens mit einer verminderten Qualität und im schlimmsten Fall als Ausschussware produziert wird.

Darüber hinaus kann es auch im Rahmen von Veränderungen der Einflussgrößen während einer laufenden Produktion, beispielsweise eine sich ändernde Qualität, Holzartenzusammensetzung und/oder Feuchte des zugeführten Materials, dazu führen, dass sich die Produktqualität verringert, was ebenfalls erst mit einer erheblichen zeitlichen Verzögerung festgestellt werden kann. Insbesondere bei einer zumindest teilweisen Verwendung von Recyclingmaterial als eingesetztes Holzmaterial, beispielsweise von melaminbeschichteten Faserplatten, kann es zu starken Schwankungen kommen, was sich negativ auf den Produktionsprozess auswirken und zu einer stark schwankenden Produktqualität führen kann.

Darüber hinaus besteht bei den Verfahren und Vorrichtungen des Standes der Technik der Nachteil, dass erst im Rahmen eines relativ langandauernden Prozesses aus einer Änderung von Steuergrößen und nachfolgenden Qualitätskontrollen der fertiggestellten Holzwerkstoffplatten ein Satz an Steuergrößen gefunden werden kann, der zu einem qualitativ hochwertigen Produkt führt.

Der Erfindung liegt daher die Aufgabe zugrunde, ein Verfahren sowie eine Vorrichtung zum prozessoptimierten Herstellen von Holzwerkstoffplatten bereitzustellen, die eine Qualitätsoptimierung sowie zugleich auch eine kontinuierliche Qualitätssicherung erlauben, eine besonders einfache und schnelle Bestimmung bestmöglicher Steuergrößen ermöglichen und zudem eine kontinuierliche Produktion mit geringstmöglichem Ausschuss und einer größtmöglichen Prozessstabilität gewährleisten.

Die Aufgabe wird erfindungsgemäß durch ein Verfahren zum prozessoptimierten Herstellen von Holzwerkstoffplatten gemäß Anspruch 1 sowie durch eine Vorrichtung zum prozessoptimierten Herstellen von Holzwerkstoffplatten gemäß Anspruch 10 gelöst. Vorteilhafte Weiterbildungen der Erfindung sind in den abhängigen Ansprüchen angegeben.

Das erfindungsgemäße Verfahren zum prozessoptimierten Herstellen von Holzwerkstoffplatten, insbesondere von Faserplatten oder MDF-Platten, weist als Verfahrensschritte zunächst ein Bereitstellen von Hackschnitzeln von einem Holzplatz und Herstellen von Fasermaterial mittels einer Hackschnitzelwäsche, eines Vorkochers, eines Kochers und/oder eines Refiners oder alternativ gleich ein Bereitstellen eines Fasermaterials, nachfolgend ein Beleimen des Fasermaterials, insbesondere innerhalb einer Beleimstation, dann ein Trocknen des beleimten Fasermaterials in einem Trockner, beispielsweise in einem Faserzyklon, gefolgt von einem Zuführen des beleimten und getrockneten Fasermaterials zu einem Faserbunker, dann ein Aufstreuen des beleimten und getrockneten Fasermaterials zum Bilden eines Formstrangs in einer Streustation und/oder auf ein Formband, und schließlich ein Pressen des Formstrangs zu einer Holzwerkstoffplatte auf. Dabei sieht die Erfindung vor, dass wenigstens ein Prozessparameter, insbesondere der Wassergehalt und/oder die auf das Fasermaterial aufgetragene Klebstoffmenge, mittels Nahinfrarotspektroskopie gemessen und die gemessenen Werte des wenigstens einen Prozessparameters an eine Steuerungseinheit zur Prozessoptimierung und/oder zur prozessoptimierten Steuerung des Verfahrens gesendet werden. Die Messung des wenigstens einen Prozessparameters an einer oder mehreren Positionen erfolgt, ausgewählt aus einer Position bei dem Bereitstellen von Hackschnitzeln unmittelbar nach dem Holzplatz, insbesondere zwischen dem Holzplatz und einer nachfolgenden Hackschnitzelwäsche, und/oder einer Position nach dem Bereitstellen von Hackschnitzeln und beim Kochen des Fasermaterials, insbesondere zwischen einer Hackschnitzelwäsche und einem Vorkocher oder einem Kocher, und/oder einer Position unmittelbar nach dem Trocknen des beleimten Fasermaterials, insbesondere zwischen dem Trockner und einem Sichter und/oder dem Faserbunker, und/oder einer Position an oder in dem Faserbunker, insbesondere an einem Fenster des Faserbunkers, und/oder einer Position nach dem Aufstreuen, insbesondere nach der Streustation und/oder nach einem Formator, und/oder vor einer Presse zum Pressen des Formstrangs und/oder im Bereich des Formbandes.

Die erfindungsgemäße Vorrichtung zum prozessoptimierten Herstellen von Holzwerkstoffplatten, insbesondere von Faserplatten oder MDF-Platten, weist ein Mittel zum Heranführen von Hackschnitzeln von einem Holzplatz und zum Herstellen eines Fasermaterials aus den Hackschnitzeln und/oder ein Mittel zum Heranführen von Fasermaterial, wenigstens eine Beleimstation zum Beleimen des Fasermaterials, wenigstens einen Trockner, beispielsweise in einem Faserzyklon, zum Trocknen des beleimten Fasermaterials, bevorzugt wenigstens einen Faserbunker zum Speichern und/oder Bereithalten des beleimten und getrockneten Fasermaterials, wenigstens eine Streustation zum Aufstreuen des beleimten und getrockneten Fasermaterials zum Bilden eines Formstrangs, sowie eine Presse zum Pressen des Formstrangs zu einer Holzwerkstoffplatte auf. Weiterhin umfasst die Vorrichtung wenigstens ein Nahinfrarotmessgerät zum Messen wenigstens eines Prozessparameters, insbesondere des Wassergehalts und/oder der auf das Fasermaterial aufgetragenen Klebstoffmenge, wobei ein oder mehrere Nahinfrarotmessgeräte unmittelbar nach dem Holzplatz, insbesondere zwischen dem Holzplatz und einer nachfolgenden Hackschnitzelwäsche, und/oder im Bereich des Herstellens des Fasermaterials, insbesondere zwischen einer Hackschnitzelwäsche und einem Vorkocher oder einem Kocher, und/oder zwischen dem Trockner und einem Sichter und/oder dem Faserbunker, und/oder an oder in dem Faserbunker, insbesondere an einem Fenster des Faserbunkers, nach der Streustation und/oder nach einem Formator und/oder vor einer Presse zum Pressen des Formstrangs und/oder im Bereich des Formbandes angeordnet sind.

Das erfindungsgemäße Verfahren und die erfindungsgemäße Vorrichtung ermöglichen eine besonders schnelle und effiziente Optimierung des Herstellungsverfahrens von Holzwerkstoffplatten auf Basis der mittels Nahinfrarotspektroskopie und/oder mittels wenigstens einer Waage gemessenen Prozessparameter. Hierdurch wird in einfacher Weise einerseits eine Qualitätsverbesserung und andererseits dann auch nachfolgend eine Qualitätssicherung erreicht. Durch eine erheblich verringerte Reaktionszeit auf nicht optimale Einstellungen und Steuergrößen kann der im Rahmen einer kontinuierlichen Produktion sich ergebende Ausschuss und zudem eine Steigerung der Prozessstabilität, selbst bei sich ändernden eingesetzten Materialien, wie dem Fasermaterial und dem Klebstoff, erreicht werden. Darüber hinaus wird eine automatische Regelung, beispielsweise des Trocknens des beleimten Fasermaterials, beispielsweise mittels eines Faserzyklons, ermöglicht, wodurch bei Schwankungen von Prozessparametern und insbesondere der Qualität der Holzschnitzel, des Wassergehalts des Fasermaterials vor und/oder nach dem Trocknen und/oder der auf dem Fasermaterial verbleibenden Leimmenge keine Verlangsamung des Produktionsprozesses mehr notwendig ist und/oder die Menge der produzierten Ausschussware deutlich reduziert werden kann.

Unter einem prozessoptimierten Herstellen von Holzwerkstoffplatten wird erfindungsgemäß ein Prozess verstanden, bei dem die Möglichkeit besteht, wenigstens eine Steuergröße des Herstellungsprozesses aufgrund gemessener Werte wenigstens eines Prozessparameters, insbesondere als die primäre Regelgröße der Prozessoptimierung, derart zu optimieren, dass eine Holzwerkstoffplatte höherer Qualität und/oder mit gleichbleibend hoher Qualität trotz einer Änderung von Prozessparametern erhalten werden kann. Die primären bzw. bevorzugten Prozessparameter sind dabei die Feuchte bzw. der Wassergehalt und/oder die aufgetragene Klebstoffmenge des gemessenen Materials, insbesondere der Hackschnitzel, des beleimten Fasermaterials, des beleimten und getrockneten Fasermaterials und/oder des Formstrangs.

Unter einem Bereitstellen von Hackschnitzeln und dem Herstellen von Fasermaterial wird ein Prozess verstanden, bei dem schlussendlich ein Fasermaterial zum Herstellen einer Holzwerkstoffplatte, erhalten wird, das unmittelbar beleimt und/oder zur Herstellung von Holzwerkstoffplatten, insbesondere zur MDF-Rohplattenfertigung, verwendet werden kann. Dabei kann das Bereitstellen ein Herantransportieren von Hackschnitzeln sein. Das Herstellen von Fasermaterial aus den Hackschnitzeln kann insbesondere eine Hackschnitzelwäsche und/oder ein Vorkochen der Hackschnitzel und/oder ein Kochen der Hackschnitzel oder des vorgekochten Materials und/oder eine Behandlung in einem Refiner, insbesondere mittels Holzfasermahlscheiben und/oder zum Zermalmen des gekochten Materials zu Fasermaterial, beinhalten. Zudem kann an einer beliebigen Verfahrensposition, vorzugsweise dem Refiner nachfolgend auch eine Einrichtung zum Lagern des Fasermaterials vorgesehen sein. Darüber hinaus ist es aber auch denkbar, dass bei dem erfindungsgemäßen Verfahren unmittelbar Fasermaterial eingesetzt wird.

Erfindungsgemäß ist ein Beleimen des Fasermaterials vorgesehen, was bevorzugt in einer Beleimstation erfolgt, die besonders bevorzugt einen Beleimmischer oder eine Blowline-Beleimungsanlage aufweist. Obwohl das Beleimen in beliebiger Weise erfolgen kann, wird bevorzugt dem in Bewegung befindlichen Fasermaterial wenigstens ein Klebstoff und bevorzugt genau ein Klebstoff zugegeben, was besonders bevorzugt durch Aufsprühen, insbesondere innerhalb eines Beleimmischers und/oder mittels eines sich im Inneren eines feststehenden Mischers bewegenden, insbesondere rotierenden Werkzeugs, erfolgt. Darüber hinaus findet bevorzugt auch eine Nassbeleimung und/oder eine Beleimung durch Aufsprühen im Blowline-Verfahren statt, bei dem besonders bevorzugt der Klebstoff als Tropfen, mit einer homogenen Tropfenverteilung und/oder mit einer hohen Tropfengeschwindigkeit auf das Fasermaterial aufgesprüht wird. Zugleich kann dem Fasermaterial auch noch Wasser zugegeben werden, was ebenfalls bevorzugt durch Aufsprühen, insbesondere innerhalb eines Beleimmischers, erfolgt. Bevorzugt ist der verwendete Klebstoff ein Phenol-Formaldehyd (PF) bzw. ein Phenolharz, ein Harnstoff-Formaldehydharz (UF), ein Melamin-Harnstoff-Formaldehydharz (MUF), ein polymeres Diphenylmethandiisocyanat (PMDI) und/oder ein beliebiger, Isocyanat-basierter Klebstoff.

Erfindungsgemäß erfolgt nach dem Beleimen zunächst ein zumindest teilweises Trocknen des beleimten Fasermaterials in einem Trockner. Alternativ ist auch ein Trocknen in einem Stromrohrtrockner denkbar. Das dadurch erhaltene, beleimte und getrocknete Fasermaterial wird dann zu einem Faserbunker zugeführt und kann dann nachfolgend zum Bilden eines Formstrangs aus dem Faserbunker bedarfsgerecht entnommen werden. Generell ist aber auch denkbar, dass das beleimte und getrocknete Fasermaterial nicht erst in einem Faserbunker zwischengelagert, sondern gleich zum Bilden eines Formstrangs eingesetzt wird.

Aus dem beleimten und getrockneten Fasermaterial wird nachfolgend ein Formstrang durch ein- oder mehrschichtiges Aufstreuen des Fasermaterials erzeugt, der dann nachfolgend durch Pressen und bevorzugt auch Erhitzen zu einer Holzwerkstoffplatte geformt wird.

Das Messen wenigstens eines Prozessparameters zur nachfolgenden Prozessoptimierung erfolgt vorzugsweise berührungslos und derart wechselwirkungsfrei, dass das gemessene Material nachfolgend weiterhin zur Herstellung einer Holzwerkstoffplatte verwendet werden kann. Erfindungsgemäß erfolgt wenigstens ein Teil dieser Messungen und bevorzugt alle Messungen mittels Nahinfrarotspektroskopie (NIRS).

Unter Nahinfrarotspektroskopie im Sinne der Erfindung wird grundsätzlich eine spektroskopische Untersuchung verstanden, die das zu untersuchende Material auch im Nahinfrarotbereich und bevorzugt ausschließlich im Nahinfrarotbereich analysiert. Unter dem Nahinfrarotbereich wird bevorzugt der Wellenlängenbereich zwischen 700 nm und 3000 nm, besonders bevorzugt zwischen 760 nm und 2500 nm und ganz besonders bevorzugt zwischen 780 nm und 2500 nm verstanden. Vorrangig wird die Nahinfrarotspektroskopie zur Bestimmung der Feuchte bzw. des Wassergehaltes des Holzes, der bereitgestellten Hackschnitzel, des bereitgestellten oder hergestellten Fasermaterials, des bereits befeuchteten und/oder beleimten Fasermaterials, des beleimten und getrockneten Fasermaterials und/oder eines beliebigen Materials an einem beliebigen Prozessschritt der Herstellung einer Holzwerkstoffplatte eingesetzt.

Bevorzugt erfolgt die Nahinfrarotspektroskopie mittels eines Nahinfrarotspektrometers, wobei grundsätzlich auch eine Messung lediglich mittels eines Nahinfrarotspektroskops denkbar wäre. Entsprechend ist das erfindungsgemäße Nahinfrarotmessgerät bevorzugt ein Nahinfrarotspektroskop bzw. ein Nahinfrarotspektrometer und/oder bevorzugt ein Online-Nahinfrarot-Messgerät, das besonders bevorzugt gebildet ist, kontinuierlich bzw. periodisch Nahinfrarot-Messungen durchzuführen. Zusätzlich können auch anlassbezogene Messungen erfolgen, beispielsweise wenn ein Benutzer eine solche Messung auslöst und/oder wenn im Rahmen einer automatischen oder manuellen Qualitätskontrolle eine Verschlechterung der Produktqualität erkannt wird.

Erfindungsgemäß ist jeweils ein Nahinfrarotmessgerät an wenigstens einer, bevorzugt mehreren und besonders bevorzugt allen system- bzw. prozessrelevanten Positionen des Herstellungsprozesses der Holzwerkstoffplatte angeordnet. Dabei wird als prozessrelevante Position grundsätzlich jede Position verstanden, an der die Eigenschaften und messbaren Prozessparameter des gemessenen Materials gegenüber einer vorhergehenden Messposition verändert wurden. Hierbei sind besonders relevante Positionen die Positionen nach dem Bereitstellen der Hackschnitzel vom Holzplatz, vor und/oder nach dem Beleimen, vor und/oder nach dem Trocknen, vor und/oder nach dem Aufstreuen des beleimten und getrockneten Fasermaterials und/oder unmittelbar vor und/oder nach dem Pressen des beleimten, getrockneten und aufgestreuten Fasermaterials.

Die Optimierung des Herstellungsprozesses erfolgt schließlich innerhalb einer Steuerungseinheit, die unmittelbar an der Vorrichtung, aber auch getrennt davon angeordnet sein kann. Bevorzugt ist die Steuerungseinheit eine speicherprogrammierbare Steuerung (SPS), wobei es sich jedoch auch um eine beliebige andere Recheneinheit, um einen Computer oder sogar um ein Rechenzentrum handeln kann. Die Prozessoptimierung erfolgt dabei auf Basis wenigstens eines Teils der gemessenen Werte wenigstens eines Teils der Prozessparameter. Bevorzugt erfolgt die Optimierung auf Basis aller messbaren bzw. gemessenen Prozessparameter und/oder unter Berücksichtigung aller gemessenen Werte des jeweiligen Prozessparameters. Insbesondere bevorzugt erfolgt die Prozessoptimierung auf Basis zahlreicher und insbesondere aller messbaren bzw. gemessenen Prozessparameter, wozu die jeweilig gemessenen Werte dazu in einer Datenbank gespeichert und/oder abrufbar gehalten werden.

Bei einer bevorzugten Weiterbildung des erfindungsgemäßen Verfahrens werden als Prozessparameter neben dem Wassergehalt und/oder dem pH-Wert auch die auf das Fasermaterial aufgetragene Klebstoffmenge und/oder die Holzart und/oder die Masse des Holz- oder Fasermaterials und/oder die Menge an Zusatzstoffen mittels Nahinfrarotspektroskopie gemessen. Grundsätzlich kann eine Messung jedes Prozessparameters mittels Nahinfrarotspektroskopie und/oder mittels eines einzelnen Nahinfrarotmessgeräts und/oder mittels einer Waage erfolgen. Zudem kann auch eine Messung mehrerer, insbesondere aller Prozessparameter zugleich bzw. mittels eines einzigen Nahinfrarotmessgeräts erfolgen.

Bevorzugt werden mittels jedem Nahinfrarotmessgerät alle Prozessparameter erfasst, die an der jeweiligen Position des Prozesses sinnvoll erfassbar sind. So ist beispielsweise ein Erfassen der Klebstoffmenge erst nach dem Beleimen des Fasermaterials sinnvoll möglich. Entsprechendes gilt für alle Prozessparameter, wobei insbesondere die Feuchte bzw. der Wasseranteil an jeder einzelnen Position gemessen werden sollte, da sich dieser Prozessparameter aufgrund der Verfahrensführung und insbesondere aufgrund von Wasserzugabe und/oder einem Trocknen aufgrund von Wärmeeintrag kontinuierlich im Verfahrensverlauf ändern kann. Eine mehrfache Holzartbestimmung erscheint zunächst nur an einer einzigen Position sinnvoll, da sich die Zusammensetzung im Prozessverlauf nicht ändern sollte, wobei jedoch bei der Verwendung verschiedener Holzarten zugleich auch im Verfahrensverlauf Informationen über die gleichmäßige Verteilung und das erfolgreiche Mischen bzw. über ein Entmischen erhaltbar sind. Entsprechend kann die Messung der Holzart sowohl nur einmalig, aber auch mehrfach oder sogar mittels jedes Nahinfrarotmessgeräts erfolgen.

Eine vorteilhafte Weiterbildung des erfindungsgemäßen Verfahrens sieht vor, dass mittels einer Waage, insbesondere mittels einer Bandwaage, als weiterer Prozessparameter die Masse des Fasermaterials und/oder die Holzmenge, insbesondere des beleimten und getrockneten Fasermaterials, ermittelt wird und die dabei gemessenen Werte ebenfalls an eine Steuerungseinheit zur Prozessoptimierung und/oder zur prozessoptimierten Steuerung des Verfahrens gesendet werden. Bei der Prozessoptimierung können also sowohl mittels Nahinfrarotspektroskopie gemessene Prozessparameter als auch die mittels wenigstens einer Waage ermittelte Masse des Fasermaterials und/oder der Hackschnitzel berücksichtigt werden, wobei eine Gestaltung der Erfindung denkbar ist, bei der nur mittels Nahinfrarotspektroskopie erfasste Prozessparameter verwendet werden. Generell kann auch an mehreren Positionen die Masse mittels jeweils einer Waage bestimmt werden, beispielsweise hinter dem Holzplatz, vor und/oder nach dem Beleimen, vor und/oder hinter dem Trocknen, auf dem Formband und/oder vor der Presse.

Bezüglich des Messens von Material mittels Nahinfrarotspektroskopie bestehen grundlegend zwei unterschiedliche Möglichkeiten. Zum einen kann die Messung im laufenden Herstellungsprozess und dabei insbesondere ohne Störung des Herstellungsprozesses und/oder an dem beim Herstellungsprozess unmittelbar verwendeten Material durchgeführt werden. Zum anderen kann zu messendes Material aus dem Herstellungsprozess ausgeleitet bzw. separiert werden, wobei hier insbesondere auch ein Rückführen des zuvor gemessenen Materials in den Herstellungsprozess zurück denkbar ist.

Entsprechend ist eine Gestaltung der erfindungsgemäßen Vorrichtung bevorzugt, bei der wenigstens eine Messung mittels Nahinfrarotspektroskopie unmittelbar am Material im Herstellungsprozess und/oder ohne ein vorheriges Separieren bzw. Ausleiten des zu messenden Materials erfolgt, wobei der zu messende Materialstrom bevorzugt nicht verlangsamt und/oder vor, insbesondere unmittelbar vor der Messung egalisiert wird.

Eine vorteilhafte Ausgestaltung des erfindungsgemäßen Verfahrens sieht vor, dass das mittels Nahinfrarotspektroskopie und/oder mittels der Waage zu messende Material vor der Messung aus dem übrigen Material, insbesondere dem übrigen beleimten und getrockneten Fasermaterial, ausgeschleust und einem Nahinfrarotmessgerät und/oder der Waage zugeleitet wird. Ebenfalls kann es vorteilhaft sein, das zu messende Material wenigstens zur Messung zu verlangsamen oder anzuhalten. Der Messung nachfolgend wird das gemessene Material bevorzugt wieder zu dem übrigen Material zugeführt, sodass auch das gemessene Material nachfolgend zum Herstellen einer Holzwerkstoffplatte verwendet wird. Darüber hinaus ist bevorzugt, dass das Ausschleusen von zu messendem Material und/oder dass das Messen mittels Nahinfrarotspektroskopie und/oder mittels der Waage kontinuierlich erfolgt.

Weiterhin ist es bevorzugt, dass wenigstens unmittelbar nach dem Beleimen und/oder unmittelbar nach dem Trocknen des Fasermaterials eine Messung mittels Nahinfrarotspektroskopie erfolgt, um Informationen über die auf das Fasermaterial aufgebrachte Klebstoffmenge und/oder über den aktuellen Wassergehalt des beleimten Fasermaterials zu erhalten. Die Information über die auf dem Fasermaterial aufgebrachte Klebstoffmenge erfolgt dabei bevorzugt ebenfalls über eine Bestimmung des Wassergehalts, wobei bei einem bekannten Wassergehalt vor dem Beleimen und gegebenenfalls einer bekannten Menge zusätzlich zugegebenen Wassers in der Beleimstation, die Menge des Klebstoffs in dem beleimten Fasermaterial bestimmbar ist. Mittels der an dieser Position des Verfahrens gemessenen Prozessparameter kann dann nahezu in Echtzeit die Menge des zugegebenen Klebstoffs und/oder zusätzlich zugeführten Wassers geregelt werden. Weiterhin kann auf Basis der mittels Nahinfrarotspektroskopie gemessenen Werte die absolut trockene (atro) Holzmasse bestimmt werden, wobei bevorzugt auf Basis der atro Holzmasse dann die vor und/oder bei dem Beleimen zuzugebende Wassermenge und/oder die zu verwendende Menge des Klebstoffs bestimmt wird.

Obwohl Messungen des wenigstens einen Prozessparameters mittels Nahinfrarotspektroskopie an beliebigen Positionen des Verfahrens erfolgen können, ist es bevorzugt, dass wenigstens eine weitere Messung des wenigstens einen Prozessparameters mittels Nahinfrarotspektroskopie nach dem Aufstreuen des beleimten und getrockneten Fasermaterials bzw. nach der Streustation und vor dem Pressen zu einer Holzwerkstoffplatte erfolgt. Durch ein Messen unmittelbar vor der Presse wird eine vollständige Optimierung des Herstellungsprozesses ermöglicht, da sich die Materialeigenschaften der fertigen Holzwerkstoffplatte unmittelbar aus den Eigenschaften des beleimten und getrockneten Fasermaterials vor dem Pressen ergeben.

Um in vorteilhafter Weise den Ausschuss bzw. die produzierten Holzwerkstoffplatten mit nicht optimalen Produkteigenschaften oder nicht der höchsten Produktqualität so gering wie möglich zu halten, wird bei einer vorteilhaften Ausgestaltung des erfindungsgemäßen Verfahrens auf Basis der mittels Nahinfrarotspektroskopie und/oder mittels der Waage gemessenen Prozessparameter, insbesondere mittels der Steuerungseinheit, eine Prozessoptimierung vorgenommen, sodass eine Anpassung des Verfahrens zum Herstellen von Holzwerkstoffplatten innerhalb eines Zeitraums von weniger als 20 Minuten, bevorzugt von weniger als 15 Minuten, besonders bevorzugt von weniger als 10 Minuten und ganz besonders bevorzugt von weniger als 5 Minuten ermöglicht wird.

Gemäß einer bevorzugten Ausführung des erfindungsgemäßen Verfahrens erfolgt zur Prozessoptimierung eine Korrelation der einzelnen Prozessparameter auf jeweilige Steuergrößen, wobei bevorzugt innerhalb der Steuerungseinheit die gemessenen Werte der Prozessparameter aller Nahinfrarotmessgeräte und/oder aller Waagen zur Berechnung der Steuergrößen genutzt und die errechneten Steuergrößen zum geregelten Betrieb des Verfahrens zum Herstellen von Holzwerkstoffplatten und/oder einer Vorrichtung zum Herstellen von Holzwerkstoffplatten verwendet werden. Entsprechend ist eine Korrelation der gemessenen Werte der Prozessparameter retrograd im Herstellungsprozess bevorzugt.

Grundsätzlich ist weiterhin denkbar, dass jedem Prozessparameter genau eine Steuergröße zugeordnet ist oder dass eine oder mehrere Steuergrößen mittels mehrerer oder aller Prozessparameter berechnet werden. Eine direkte Zuordnung besteht beispielsweise zwischen einer gemessenen Holzart und/oder der gemessenen Holzmaterialqualität und der Steuerung bei dem Bereitstellen der Hackschnitzel. Dagegen kann die Menge des zugegebenen Klebstoffs und/oder die Klebstoffzusammensetzung und/oder eine Menge des beim Beleimen zusätzlich zuzugebenden Wassers von mehreren Prozessparametern abhängig bestimmt werden, wobei insbesondere der Wassergehalt an verschiedenen Positionen des Prozesses, aber auch die verwendete Holzart, der pH-Wert und/oder die nach dem Beleimen auf dem Fasermaterial verbleibende Klebstoff menge hier maßgeblich sein können. In Abhängigkeit des pH-Wertes kann weiterhin beispielsweise die Klebstoffmenge, die Klebstoffzusammensetzung und/oder die Klebstoffart eingestellt werden. Darüber hinaus hängt auch der Trockenprozess von zahlreichen dieser Prozessparameter, insbesondere der auf das Fasermaterial aufgetragenen Klebstoffmenge, dem Wassergehalt des Fasermaterials, der Holzart, der Klebstoffzusammensetzung und/oder der Klebstoffart ab.

Zudem kann auf Basis der gemessenen Werte der Prozessparameter eine Anpassung weiterer Steuergrößen, wie beispielsweise der Pressdauer, des Pressdrucks, der Presstemperatur, der aufzustreuenden Menge des beleimten und getrockneten Fasermaterials und/oder der Transportgeschwindigkeit, erfolgen.

Bevorzugt erfolgt die Prozessoptimierung, insbesondere in der Steuerungseinheit, als selbstlernender Prozess, als automatisch geregelter Prozess und/oder unter Verwendung einer künstlichen Intelligenz, wobei bevorzugt ein Benutzereingriff, insbesondere in Form von hinterlegbaren Offset-Werten und/oder Grenzwerten, ermöglicht wird. Eine Prozessoptimierung als ein automatisch geregelter Prozess erfolgt dabei bevorzugt als eine Regelung auf festgelegte Zielwerte, wie eine Zielfeuchte und/oder eine Zielbeleimungsmenge, an einer definierten Position des Prozesses. Die vom Benutzer hinterlegten Grenzwerte können dabei Minimalwerte und/oder Maximalwerte für eine Zielgröße sein, insbesondere um den Prozess innerhalb erwünschter und/oder technisch sinnvoller Grenzen zu halten.

Zur Optimierung des Verfahrens wird bevorzugt ein Datenmodell in der Steuerungseinheit, in der speicherprogrammierbaren Steuerung und/oder in einem beliebigen anderen Computer gebildet. Zusätzlich oder alternativ kann der Aufbau einer Datenbank mit den erfassten Messwerten, weiteren erfassten Prozessgrößen und/oder den Steuergrößen des Prozessablaufs sowie gegebenenfalls auch Daten aus einer nachfolgenden Qualitätsprüfung der Holzwerkstoffplatten erfolgen. Eine solche Datenbank erlaubt dann nachfolgend besonders einfach, eine Optimierung mittels selbstlernender Prozesse oder durch den Einsatz künstlicher Intelligenz vorzunehmen, wobei dabei entwickelte Modelle und/oder erkannte Korrelationen wieder in die Echtzeit-Regelung des Herstellungsverfahrens zurückfließen können.

Eine vorteilhafte Ausgestaltung des erfindungsgemäßen Verfahrens sieht zudem vor, dass unmittelbar vor wenigstens einer, bevorzugt mehrerer und besonders bevorzugt aller Messungen mittels Nahinfrarotspektroskopie das zu messende Material, insbesondere das beleimte und/oder getrocknete Fasermaterial und/oder der Formstrang, egalisiert wird. Das Egalisieren erfolgt bevorzugt mittels eines Streifblechs bzw. mittels eines Egalisierungsblechs, das besonders bevorzugt sich wenigstens über den zu messenden Bereich und ganz besonders bevorzugt über die gesamte Breite des zu messenden Materials erstreckt. Das Streif- bzw. Egalisierungsblech erstreckt sich dabei derart über dem zu messenden Material, dass eine gleichmäßige Schichtdicke, eine ebene Oberfläche, eine gleichmäßig verdichtete Packung und/oder eine gleichmäßige Oberfläche erreicht wird. Entsprechend wird durch das Egalisieren die Qualität und die Zuverlässigkeit der gemessenen Werte erhöht, wobei insbesondere ein gleichbleibender Abstand des gemessenen Materials zu dem Nahinfrarotmessgerät maßgeblich ist.

Schließlich wird eine Gestaltung des erfindungsgemäßen Verfahrens bevorzugt, bei der eine Regelung des Trockners, insbesondere der Trocknungstemperatur, und/oder eine Regelung der Beleimung, insbesondere der Menge der in der Beleimstation dem Fasermaterial zugegebenen Klebstoffmenge, auf Basis der mittels Nahinfrarotspektroskopie und/oder mittels der Waage gemessenen Werte der Prozessparameter, insbesondere des Wassergehalts und/oder der auf das Fasermaterial aufgetragenen Klebstoffmenge und/oder der Masse des Fasermaterials, erfolgt. Darüber hinaus ist es bevorzugt, die vor und/oder bei dem Beleimen zuzugebende Wassermenge und/oder die zu verwendende Menge des Klebstoffs ausschließlich oder zusätzlich zu an einer anderen Messposition gemessenen Prozessparametern auf Basis der vor dem Pressen gemessenen Prozessparameter und insbesondere auf Basis des dort gemessenen Wassergehalts und/oder der aufgetragenen Klebstoffmenge, zu regeln.

Eine bevorzugte Ausgestaltung der erfindungsgemäßen Vorrichtung sieht vor, dass eine Waage und insbesondere eine Bandwaage zum Bestimmen der Masse des Fasermaterials, insbesondere des beleimten und getrockneten Fasermaterials, nach dem Trockner, insbesondere unmittelbar nach dem Trockner, und/oder vor einem Sichter und/oder vor dem Faserbunker angeordnet ist. Darüber hinaus ist aber auch eine Anordnung einer oder mehrerer weiterer Waagen denkbar, beispielsweise zum Wiegen des Formstrangs.

Weiterhin ist eine Gestaltung der erfindungsgemäßen Vorrichtung bevorzugt, bei der wenigstens eine Messung mittels Nahinfrarotspektroskopie unmittelbar am Material im Herstellungsprozess und/oder ohne ein vorheriges Separieren bzw. Ausleiten des zu messenden Materials erfolgt, wobei der zu messende Materialstrom bevorzugt nicht verlangsamt und/oder vor, insbesondere unmittelbar vor der Messung egalisiert wird.

Alternativ oder zusätzlich kann für wenigstens einen Teil der vorzunehmenden Messungen auch eine Fördervorrichtung für das mittels Nahinfrarotspektroskopie zu messende Material vorgesehen sein und/oder das zu messende Material vor der Messung dem übrigen Material, insbesondere dem übrigen beleimten und/oder getrockneten Fasermaterial, entnommen werden. Bei dieser Ausgestaltung der Vorrichtung und des Verfahrens wird das zu messende Material also zunächst separiert und bevorzugt eine Bypass-Strecke zugeführt und dort gemessen, wobei besonders bevorzugt das gemessene Material nachfolgend wieder in den Herstellungsprozess zurückgeführt wird. Die Fördervorrichtung ist dabei bevorzugt ein Förderband und/oder weist quer zur Transportrichtung verlaufende Rippen auf.

Ein Separieren bzw. Ausleiten des zu messenden Materials erlaubt dabei in besonders einfacher Weise ein Egalisieren des Materials und/oder ein Glattstreichen des Materials und/oder ein Bringen des Materials auf eine vorgegebene und gegebenenfalls von dem Formstrang abweichende Strangdicke bzw. Strangdichte. Zudem ist ein Verlangsamen oder sogar ein zeitweiliges Anhalten des zu messenden Materials, insbesondere zur Messung denkbar, wobei jedoch grundsätzlich ein Messen ohne eine Verlangsamung bevorzugt ist. Generell ist auch denkbar, dass ein Teil der Messungen mittels Nahinfrarotspektroskopie mit separiertem Material und ein Teil der Messungen mittels Nahinfrarotspektroskopie direkt im Prozessablauf stattfindet.

Schließlich sieht eine vorteilhafte Ausgestaltung der erfindungsgemäßen Vorrichtung vor, dass wenigstens ein Nahinfrarotmessgerät, bevorzugt ein Teil der Nahinfrarotmessgeräte und besonders bevorzugt alle Nahinfrarotmessgeräte höhenverstellbar und/oder an einer Schiene traversierend, insbesondere dabei rechtwinklig zur Transportrichtung des zu messenden Materials verschieblich, angeordnet sind. Die Höhenverstellung und/oder das Traversieren kann dabei manuell erfolgen, wobei es bevorzugt ist, dass dies zusätzlich oder ausschließlich motorisch erfolgt, insbesondere um ein präzises Anfahren einer oder mehrerer Messpositionen zu ermöglichen. Die Höheneinstellung ist dabei bevorzugt derart gebildet, dass die Oberfläche des zu messenden Materials, insbesondere unabhängig von der Schichtdicke des zu messenden Materials, grundsätzlich aus einer Höhe zwischen 50 mm und 750 mm, besonders bevorzugt zwischen 100 mm und 500 mm, ganz besonders bevorzugt zwischen 200 mm und 300 mm und insbesondere aus einer Höhe von 250 mm messbar ist.

Ein Ausführungsbeispiel wird nachstehend mit Bezug auf die Zeichnung näher beschrieben. In der Figur zeigt:

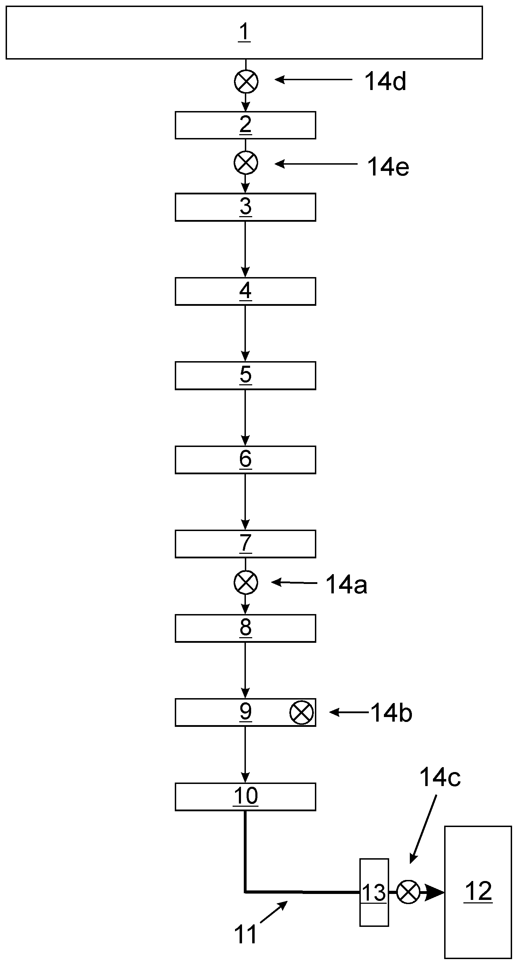

- Fig. 1: ein schematisches Diagramm der Anordnung der einzelnen Komponenten und des Ablaufs des Herstellungsverfahrens mit den Positionen der jeweiligen Nahinfrarotspektroskopie-Messung.

Bei einer schematisch und vereinfacht in der Fig. 1 dargestellten Anlage zum Herstellen einer mitteldichten Faserplatte, also einer MDF-Platte, werden zunächst Hackschnitzel von einem Holzplatz 1 zu einer Hackschnitzelwäsche 2 transportiert und dort gereinigt. Bei dem Transport auf einem Transportband werden die Holzschnitzel mittels eines ersten Nahinfrarotmessgeräts 14d aus einem Abstand von etwa 25 cm während des Transports gemessen. Aus den Messdaten wird wenigstens als Prozessparameter die Holzfeuchte und bevorzugt auch die Holzart sowie gegebenenfalls auch der pH-Wert bestimmt. Darüber hinaus kann auch die Qualität des Materials der Hackschnitzel, die Menge enthaltener Fremdstoffe, wie Melaminharz, und/oder die Größenverteilung der Hackschnitzel ermittelt werden. Auch der Hackschnitzelwäsche 2 nachfolgend wird eine Messung von Prozessparametern mittels eines zweiten Nahinfrarotmessgeräts 14e durchgeführt.

Der Hackschnitzelwäsche 2 nachfolgend wird dann daraus ein Fasermaterial hergestellt, wozu die Hackschnitzel zunächst einem Vorkocher 3, nachfolgend einem Kocher 4 und schließlich einem Refiner 5 zugeführt werden, wobei die gekochten Hackschnitzel in dem Refiner 5 zwischen einer feststehenden Mahlscheibe als Stator und einer rotierend angetriebenen Mahlscheibe als Rotor zu Fasermaterial zerkleinert werden.

Nachfolgend erfolgt ein Beleimen des Fasermaterials in einer Beleimstation 6, in der dem Fasermaterial ein Klebstoff sowie bedarfsweise eine geringe Menge Wasser zugesetzt werden. Das beleimte Fasermaterial wird dann einem Trockner 7 zugeführt. Das den Trockner 7 verlassende, beleimte und getrocknete Fasermaterial wird dann abermals mittels eines Nahinfrarotmessgeräts 14a gemessen, wobei als Prozessparameter abermals vorzugsweise wenigstens die Feuchte und/oder der pH-Wert bestimmt werden. Darüber hinaus kann auch die aufgetragene und auf dem Fasermaterial verbleibende Klebstoffmenge als Prozessparameter bestimmt werden.

An dieser Position der Messung mittels eines Nahinfrarotmessgeräts 14a besteht jedoch der Unterschied, dass das zu messende Fasermaterial vor dem Messen von dem übrigen Materialstrom ausgesondert und mittels eines Förderbands mit Rippen zu dem Nahinfrarotmessgerät 14a transportiert wird. Dabei wird das zu messende Fasermaterial wenigstens verlangsamt und bei Bedarf auch zeitweise angehalten, beispielsweise um ein vollständiges Auskühlen und/oder Ausdampfen des getrockneten Fasermaterials vor der Messung zu erlauben. Zudem findet auch abermals vor dem Messen eine Egalisierung statt. Das gemessene Fasermaterial wird nach der Messung wieder dem übrigen Fasermaterial zugeführt und dem Sichter 8 sowie dem Faserbunker 9 zugeleitet.

Nach dem Durchleiten des beleimten und getrockneten Fasermaterials durch einen Sichter 8, in dem insbesondere Schwer- und Grobgut aus dem Fasermaterial abgetrennt wird, sammelt sich das verbleibende Fasermaterial in einem Faserbunker 9. Dabei weist der Faserbunker 9 ein Messfenster auf, durch das das innerhalb des Faserbunkers 9 enthaltene, beleimte und getrocknete Fasermaterial mittels eines Nahinfrarotmessgeräts 14b abermals gemessen werden kann, insbesondere um die auf dem Fasermaterial befindliche Klebstoffmenge und die Feuchte des Materials zu bestimmen.

Nach dem Trockner 7 und/oder nach dem Sichter 8 ist an einem Transportband des Fasermaterials eine Bandwaage angeordnet, die die Masse des beleimten und getrockneten Fasermaterials misst, sodass die Masse ebenfalls als Prozessparameter zur Regelung der Anlage und zur Prozessoptimierung zur Verfügung steht.

In einer Streustation 10 wird das dem Faserbunker 9 entnommene Fasermaterial auf ein Formband 11 aufgestreut und der so gebildete Formstrang dann über einen Formator 13 zu einer Presse 12 zum Herstellen von MDF-Rohplatten geleitet. Dabei ist abermals zwischen dem Formator 13 und der Presse 12 ein Nahinfrarotmessgerät 14c angeordnet.

Um bei einem Produktionswechsel, der beispielsweise dreimal am Tag erfolgen kann, den Ausschluss so gering wie möglich zu halten sowie um die Produktqualität auch bei sich ändernden Ausgangsmaterialien, wie einer leichten Änderung der Holzzusammensetzung, der Holzart oder der Holzfeuchte, und/oder sich ändernden Umgebungsparametern, wie der Umgebungstemperatur oder der Luftfeuchte, die Faserplatte in gleichbleibend sehr hoher Qualität herstellen zu können, ist vorgesehen, dass sämtliche mittels der Nahinfrarotmessgeräte 14a- e sowie mittels der Waage aufgenommenen Messwerte der Prozessparameter, insbesondere der Holzart, der Feuchte, des pH-Wertes, der aufgetragenen Klebstoffmenge und der Masse, an eine Steuervorrichtung übertragen werden und von dort aus in Echtzeit eine automatische Prozessoptimierung sowie eine Regelung der einzelnen Prozessschritte mit den gemessenen Prozessparametern als Regelgrößen erfolgt. Dabei können selbstverständlich auch Messwerte und Daten der Anlage sowie weiterer Sensoren berücksichtigt werden. Insbesondere erfolgt ein geregelter Betrieb der Beleimstation 6 und/oder des Trockners 7 auf Basis der gemessenen Prozessparameter.

Dabei ist es vorteilhaft, wenn mittels Daten, die über einen längeren Zeitraum gemessen und in einer Datenbank abgelegt wurden, ein Datenmodell des Prozessablaufs unter Berücksichtigung der Variationen aller Prozessparameter erstellt wird, wobei dies auch unter Einsatz künstlicher Intelligenz erfolgen kann.

### Bezugszeichenliste

- 1: Holzplatz
- 2: Hackschnitzelwäsche
- 3: Vorkocher
- 4: Kocher
- 5: Refiner
- 6: Beleimstation
- 7: Trockner
- 8: Sichter
- 9: Faserbunker
- 10: Streustation
- 11: Formband
- 12: Presse
- 13: Formator
- 14a-e: Nahinfrarotmessgerät

## Patentansprüche

1. Verfahren zum prozessoptimierten Herstellen von Holzwerkstoffplatten, insbesondere von Faserplatten oder MDF-Platten, mit den Schritten:
- Bereitstellen von Hackschnitzeln von einem Holzplatz (1) und Herstellen von Fasermaterial mittels einer Hackschnitzelwäsche (2), eines Vorkochers (3), eines Kochers (4) und/oder eines Refiners (5) und/oder Bereitstellen eines Fasermaterials,
- Beleimen des Fasermaterials, insbesondere innerhalb einer Beleimstation (6),
- Trocknen des beleimten Fasermaterials in einem Trockner (7),
- Zuführen des beleimten und getrockneten Fasermaterials zu einem Faserbunker (9),
- Aufstreuen des beleimten und getrockneten Fasermaterials zum Bilden eines Formstrangs in einer Streustation (10) und/oder auf ein Formband (11),
- Pressen des Formstrangs zu einer Holzwerkstoffplatte,
**dadurch gekennzeichnet, dass**
- wenigstens ein Prozessparameter, insbesondere der Wassergehalt und/oder die auf das Fasermaterial aufgetragene Klebstoffmenge, mittels Nahinfrarotspektroskopie gemessen und
- die gemessenen Werte des wenigstens einen Prozessparameters an eine Steuerungseinheit zur Prozessoptimierung und/oder zur prozessoptimierten Steuerung des Verfahrens gesendet werden, wobei
- die Messung des wenigstens einen Prozessparameters an einer oder mehreren Positionen erfolgt, ausgewählt aus
a) bei dem Bereitstellen von Hackschnitzeln unmittelbar nach dem Holzplatz (1), insbesondere zwischen dem Holzplatz (1) und einer nachfolgenden Hackschnitzelwäsche (2), und/oder
b) nach dem Bereitstellen von Hackschnitzeln und beim Kochen des Fasermaterials, insbesondere zwischen einer Hackschnitzelwäsche (2) und einem Vorkocher (3) oder einem Kocher (4), und/oder
c) unmittelbar nach dem Trocknen des beleimten Fasermaterials, insbesondere zwischen dem Trockner (7) und einem Sichter (8) und/oder dem Faserbunker (9), und/oder
d) an oder in dem Faserbunker (9), insbesondere an einem Fenster des Faserbunkers (9), und/oder
e) nach dem Aufstreuen, insbesondere nach der Streustation (10) und/oder nach einem Formator (13), und/oder vor einer Presse (12) zum Pressen des Formstrangs.

2. Verfahren zum prozessoptimierten Herstellen von Holzwerkstoffplatten nach Anspruch 1, **dadurch gekennzeichnet, dass** als Prozessparameter neben dem Wassergehalt und/oder der auf das Fasermaterial aufgetragenen Klebstoffmenge auch der pH-Wert und/oder die Holzart und/oder die Holzmenge mittels Nahinfrarotspektroskopie gemessen werden.

3. Verfahren zum prozessoptimierten Herstellen von Holzwerkstoffplatten nach Anspruch 1 oder 2, **dadurch gekennzeichnet, dass** mittels einer Waage als weiterer Prozessparameter die Masse des Fasermaterials und/oder die Holzmenge, insbesondere des beleimten und getrockneten Fasermaterials, ermittelt wird und die dabei gemessenen Werte ebenfalls an eine Steuerungseinheit zur Prozessoptimierung und/oder zur prozessoptimierten Steuerung des Verfahrens gesendet werden.

4. Verfahren zum prozessoptimierten Herstellen von Holzwerkstoffplatten nach wenigstens einem der vorhergehenden Ansprüche, **dadurch gekennzeichnet, dass** das mittels Nahinfrarotspektroskopie und/oder mittels der Waage zu messende Material vor der Messung aus dem übrigen Material, insbesondere dem übrigen beleimten und getrockneten Fasermaterial, ausgeschleust und einem Nahinfrarotmessgerät (14a - e) und/oder der Waage zugeleitet wird, wobei das zu messende Material bevorzugt zur Messung verlangsamt oder angehalten wird und/oder das zu messende Material der Messung nachfolgend wieder zu dem übrigen Material zugeführt wird.

5. Verfahren zum prozessoptimierten Herstellen von Holzwerkstoffplatten nach wenigstens einem der vorhergehenden Ansprüche, **dadurch gekennzeichnet, dass** das Ausschleusen von zu messendem Material und/oder das das Messen mittels Nahinfrarotspektroskopie und/oder mittels der Waage kontinuierlich erfolgt.

6. Verfahren zum prozessoptimierten Herstellen von Holzwerkstoffplatten nach wenigstens einem der vorhergehenden Ansprüche, **dadurch gekennzeichnet, dass** auf Basis der mittels Nahinfrarotspektroskopie und/oder der Waage gemessenen Prozessparameter mittels der Steuerungseinheit eine Prozessoptimierung vorgenommen wird, sodass eine Anpassung des Verfahrens zum Herstellen von Holzwerkstoffplatten innerhalb eines Zeitraums von weniger als 15 Minuten ermöglicht wird.

7. Verfahren zum prozessoptimierten Herstellen von Holzwerkstoffplatten nach wenigstens einem der vorhergehenden Ansprüche, **dadurch gekennzeichnet, dass** zur Prozessoptimierung eine Korrelation der einzelnen Prozessparameter auf jeweilige Steuergrößen erfolgt, wobei bevorzugt innerhalb der Steuerungseinheit alle mittels Nahinfrarotspektroskopie und/oder mittels der Waage gemessenen Werte der Prozessparameter zur Berechnung der Steuergrößen genutzt und die errechneten Steuergrößen zum geregelten Betrieb des Verfahrens verwendet werden.

8. Verfahren zum prozessoptimierten Herstellen von Holzwerkstoffplatten nach wenigstens einem der vorhergehenden Ansprüche, **dadurch gekennzeichnet, dass** die Prozessoptimierung in der Steuerungseinheit als selbstlernender Prozess, als automatisch geregelter Prozess und/oder unter Verwendung einer künstlichen Intelligenz erfolgt, wobei bevorzugt ein Benutzereingriff, insbesondere in Form von hinterlegbaren Offset-Werten und/oder Grenzwerten, ermöglicht wird.

9. Verfahren zum prozessoptimierten Herstellen von Holzwerkstoffplatten nach wenigstens einem der vorhergehenden Ansprüche, **dadurch gekennzeichnet, dass** eine Regelung des Trockners (7) und/oder der Beleimung auf Basis der mittels Nahinfrarotspektroskopie und/oder mittels der Waage gemessenen Werte der Prozessparameter, insbesondere des Wassergehalts und/oder der auf das Fasermaterial aufgetragenen Klebstoffmenge und/oder der Masse des Fasermaterials, erfolgt.

10. Vorrichtung zum prozessoptimierten Herstellen von Holzwerkstoffplatten, insbesondere von Faserplatten oder MDF-Platten, mit
- einem Mittel zum Heranführen von Hackschnitzeln von einem Holzplatz (1) und zum Herstellen eines Fasermaterials aus den Hackschnitzeln und/oder Mittel zum Heranführen von Fasermaterial,
- wenigstens einer Beleimstation (6) zum Beleimen des Fasermaterials,
- wenigstens einem Trockner (7) zum Trocknen des beleimten Fasermaterials,
- wenigstens einem Faserbunker (9) zum Speichern und/oder Bereithalten des beleimten und getrockneten Fasermaterials,
- wenigstens einer Streustation (10) zum Aufstreuen des beleimten und getrockneten Fasermaterials zum Bilden eines Formstrangs,
- einer Presse (12) zum Pressen des Formstrangs zu einer Holzwerkstoffplatte,
**gekennzeichnet durch**
- wenigstens ein Nahinfrarotmessgerät (14a - e) zum Messen wenigstens eines Prozessparameters, insbesondere des Wassergehalts und/oder der auf das Fasermaterial aufgetragenen Klebstoffmenge, wobei
- ein oder mehrere Nahinfrarotmessgeräte (14a - e)
a) unmittelbar nach dem Holzplatz (1), insbesondere zwischen dem Holzplatz (1) und einer nachfolgenden Hackschnitzelwäsche (2), und/oder
b) im Bereich des Herstellens des Fasermaterials, insbesondere zwischen einer Hackschnitzelwäsche (2) und einem Vorkocher (3) oder einem Kocher (4), und/oder
c) zwischen dem Trockner (7) und einem Sichter (8) und/oder dem Faserbunker (9), und/oder
d) an oder in dem Faserbunker (9), insbesondere an einem Fenster des Faserbunkers (9), und/oder
e) nach der Streustation (10) und/oder nach einem Formator (13) und/oder vor einer Presse (12) zum Pressen des Formstrangs
angeordnet sind.

11. Vorrichtung zum prozessoptimierten Herstellen von Holzwerkstoffplatten nach Anspruch 10, **dadurch gekennzeichnet, dass** eine Waage und insbesondere eine Bandwaage zum Bestimmen der Masse des beleimten und getrockneten Fasermaterials nach dem Trockner (7) und/oder vor einem Sichter (8) und/oder vor dem Faserbunker (9) angeordnet ist.

12. Vorrichtung zum prozessoptimierten Herstellen von Holzwerkstoffplatten nach Anspruch 10 oder 11, **dadurch gekennzeichnet, dass** eine Fördervorrichtung für das mittels Nahinfrarotspektroskopie und/oder mittels der Waage zu messende Material vorgesehen ist und/oder das zu messende Material vor der Messung dem übrigen Material, insbesondere dem übrigen beleimten und getrockneten Fasermaterial, entnommen wird.

13. Vorrichtung zum prozessoptimierten Herstellen von Holzwerkstoffplatten nach wenigstens einem der Ansprüche 10 - 12, **dadurch gekennzeichnet, dass** wenigstens eine Messung mittels Nahinfrarotspektroskopie und/oder mittels der Waage unmittelbar am Material im Herstellungsprozess und/oder ohne ein vorheriges Separieren des zu messenden Materials erfolgt, wobei der zu messende Materialstrom bevorzugt vor der Messung egalisiert und/oder nicht verlangsamt wird.

14. Vorrichtung zum prozessoptimierten Herstellen von Holzwerkstoffplatten nach wenigstens einem der Ansprüche 10 - 13, **dadurch gekennzeichnet, dass** wenigstens ein Teil der Nahinfrarotmessgeräte (14a - e) und bevorzugt alle Nahinfrarotmessgeräte (14a - e) höhenverstellbar und/oder an einer Schiene traversierend angeordnet sind.
